# EUROPÄISCHE PATENTSCHRIFT

(11) **EP 0 710 821 B1**
(45) Veröffentlichungstag und Bekanntmachung des Hinweises auf die Patenterteilung: **10.04.2002**
(21) Anmeldenummer: 95113277.8
(22) Anmeldetag: 24.08.1995
(51) Int. Cl.: G01F 23/36

(54) **Tankfüllstandsgeber**
Indicator for measuring liquid level in a container
Sonde de mesure d'un niveau d'un liquide dans un réservoir

(30) Priorität: 27.10.1994 DE 4438322
(43) Veröffentlichungstag der Anmeldung: 08.05.1996
(73) Patentinhaber: Pierburg Aktiengesellschaft, 41460 Neuss (DE); Preh-Werke GmbH & Co. KG, 97616 Bad Neustadt a.d. Saale (DE)
(72) Erfinder: Grötschel, Norbert, D-41472 Neuss (DE); Breuer, Horst, D-41466 Neuss (DE); Reuss, Oswald, D-97656 Unterelsbach (DE)

(56) Entgegenhaltungen:
- EP-A- 0 139 873
- EP-A- 0 249 542
- FR-A- 2 661 497
- FR-A- 2 661 498
- GB-A- 2 197 484

## Beschreibung

Die Erfindung betrifft einen Tankfüllstandsgeber mit Schwimmerhebel der abhängig vom Füllstand ein Schleiferpotentiometer einstellt, an einem Schlingertopf einer im Tank befindlichen Brennstoffördereinheit angeordnet ist und einen Halter aufweist, der mit dem Schlingertopf verbunden ist, wobei der Schwimmerhebel mit einem Schleiferhebel verbunden ist.

Ein derartiger Tankfüllstandsgeber ist in Verbindung mit einer sogenannten Fördereinheit mit Schlingertopf aus dem Lieferprogramm der Anmelderin bekannt und für den Einbau in das Fahrzeug Golf der Volkswagenwerk AG, Wolfsburg, vorgesehen.

Dieser Fördereinheit stützt sich in eingebautem Zustand am Tankboden ab, wobei der Füllstandsgeber in einer solchen Höhe am Schlingertopf angeordnet ist, daß das vom Schwimmerhebel betätigte Potentiometer über den sich verändernden Füllstand mit größter Auflösung arbeitet.
Hierbei ist auf eine exakte axiale und radiale Führung des Schwimmerhebels zu achten, um Sprünge in der Füllstandsanzeige zu verhindern.

Aus der FR-A1 26 61 498 ist bereits ein Tankfüllstandsgeber bekannt, bei dem der Schwimmerhebel mit einer Abkröpfung durch eine Öffnung eines Schleiferhebels eines Potentiometers ragt, in eine Lagerbohrung des Halters hineinragt und mit einem unterhalb der Abkröpfung bestehenden Hebelabschnitt in einer Verklippsung gegen axiales Auswandern aus der Lagerbohrung gesichert ist. Eine an einer Schleiferbahn des Potentiometers angeordnete Blattfeder belastet den Schleiferhebel einseitig in Axialrichtung an einen Halterkragen. Obwohl der Schwimmerhebel mit der sehr lang ausgeführten Abkröpfung innerhalb der Lagerbohrung nur eine geringe Schwenkbewegung ausführen kann, kann durch die einseitige Belastung des Schleiferhebels eine Schiefstellung vorliegen, die die Potentiometerfunktion beeinträchtigt und eine große Reibung bei Schwimmerverstellung bewirkt. Darüber hinaus ist der Schleiferhebel nur mit montiertem Schwimmerhebel unverlierbar mit dem Halter verbunden.

Hiervon ausgehend liegt der Erfindung die Aufgabe zugrunde, einen gattungsgemäßen Füllstandsgeber derart auszuführen, daß bei einfachem Aufbau eine exakte Lagerung des Schwimmerhebels erreicht wird und eine Unverlierbarkeit des Schleiferhebels bei noch nicht montiertem Schwimmerhebel.

Diese Aufgabe ist durch die im Patentanspruch angegebenen Merkmale gelöst.

Ein Ausführungsbeispiel der Erfindung ist in der Zeichnung dargestellt und wird nachfolgend beschrieben.

Diese zeigt:
Fig. 1
   eine Fördereinhheit mir Füllstandsgeber;
Fig. 2
   einen Schnitt durch den Füllstandsgeber.

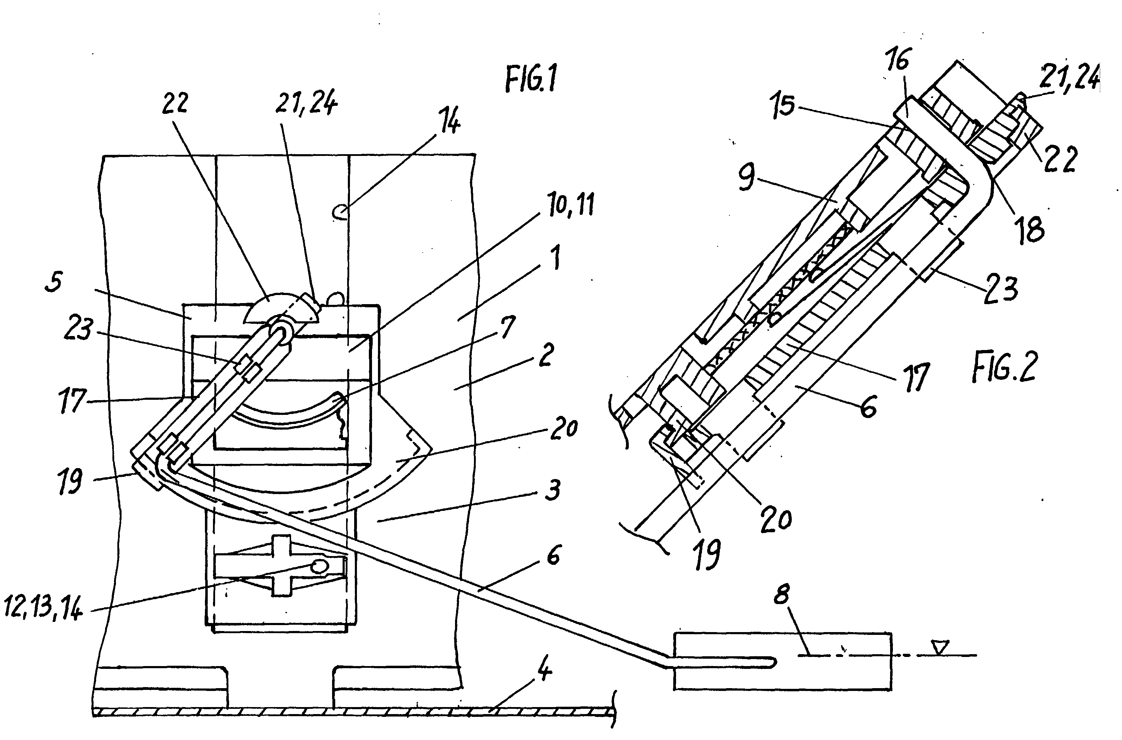

Fig. 1 zeigt eine erfinderische Fördereinheit 1, die aus einem Schlingertopf 2 und einer in diesem angeordnete Brennstoffpumpe 3 besteht und auf dem Tankboden 4 abgestützt oder befestigt ist. An dieser Fördereinheit 1 bzw. dem Schlingertopf 2 ist ein Füllstandsgeber 5 angeordnet, der einen Schwimmerhebel 6 aufweist, der ein Schleiferpotentiometer 7 abhängig vom Füllstand 8 einstellt, wobei der Potentiometerwiderstandswert einem bestimmten Füllstand bzw. Tankinhalt gleichgesetzt wird.

Der Füllstandsgeber 5 ist an einem Halter 9 befestigt, der mittels Nuten 10 auf eine Federleiste 11 des Schlingertopfes 2 geschoben und mittels eines auf einer federnden Halterlasche 12 befindlichen Zapfens 13, der in eine auf der Federleiste 11 befindliche Öffnung 14 einrastet, arretiert ist.
Bei der Montage des Füllstandsgebers 5 wird dieser also auf der Federleiste 11 hoch und runter verstellt, bis der Zapfen 13 auf der Halterlasche 12 in die in Überdeckung gelangte Öffnung 14 auf der Federleiste 11 einrastet.

Fig. 2 zeigt einen Schnitt durch den Füllstandsgeber 5 mit dem erwähnten Halter 9, der eine Lagerbohrung 15 für eine Abkröpfung 16 des Schwimmerhebels 6 aufweist, und einen Schleiferhebel 17, der mit Schleiferfahnen über das Schleiferpotentiometer 7 fährt und mit dem Schwimmerhebel 6 in der Art verbunden ist, daß die Abkröpfung 16 durch eine Öffnung 18 des Schleiferhebels 17 ragt und lose in der Lagerbohrung 15 des Halters 9 hineinragt. Der Schleiferhebel 17 umfaßt mit einem äußeren unteren Rand 19 einen äußeren Kragen 20 des Halters 9 und hinterfaßt mit einem oberen äußeren Rand 21 einen Kragen 22 des Halters 9. Damit ist der Schleiferhebel 17 innerhalb des Halters 9 axial und radial geführt. Der Schwimmerhebel 6 ist gegen axiales Auswandern aus der Lagerbohrung 15 dadurch gesichert, daß der unterhalb der Abkröpfung 16 bestehende Hebelabschnitt in einer Verklippsung 23 gehalten ist.

Durch diese Ausführung ergibt sich eine exakte axiale und radiale Führung des Schwimmerund des Schleiferhebels 6 und 17.

Außer der Verklipssung ist hier keine weitere Maßnahme zur Sicherung des Schwimmerhebels 6 und des Schleiferhebels 17 mehr erforderlich, bisher übliche axiale Begrenzungsmittel entfallen daher.

Eine Demontage ist durch Herausnehmen des Schwimmerhebels 6 aus der Verklippsung 23 leicht durchführbar geworden.

Dadurch, daß der obere Rand 21 des Schleiferhebels 17 den Kragen 22 des Halters 9 in der Art einer Verklippsung 24 hinterfaßt, ist der Schleiferhebel 17 auch ohne befestigtem Schwimmerhebel 6 unverlierbar in dem Halter 9 gehalten.

## Patentansprüche

1. Tankfüllstandsgeber mit Schwimmerhebel (6), der abhängig vom Füllstand ein Schleiferpotentiometer (7) einstellt, an einem Schlingertopf (2) einer im Tank befindlichen Brennstoffördereinheit angeordnet ist und einen Halter (9) aufweist, der mit dem Schlingertopf (2) verbunden ist, wobei der Schwimmerhebel (6) mit einem Schleiferhebel (17) verbunden ist, mit einer Abkröpfung (16) durch eine Öffnung (18) des Schleiferhebels (17) ragt, in eine Lagerbohrung (15) des Halters (9) hineinragt und mit einem unterhalb der Abkröpfung (16) bestehenden Hebelabschnitt in einer Verklippsung (23) gegen axiales Auswandern aus der Lagerbohrung (15) gesichert ist, und wobei der Schleiferhebel (17) mit einem unteren Rand (19) einen Kragen (20) des Halters (9) umfaßt und mit einem oberen Rand (21) einen Kragen (22) des Halters (9) hinterfaßt, der obere Rand (21 ) des Schleiferhebels (17) den Kragen (22) des Halters (9) in der Art einer Verklippsung (24) hinterfaßt und der Schleiferhebel (17) dadurch innerhalb des Halters (9) axial in beide Richtungen unverlierbar geführt ist.

## Claims

1. Tank level detector with float lever (6), which adjusts a wiper potentiometer (7) in dependence upon the level, is disposed on a slinger pot (2) of a fuel feed unit situated in the tank and comprises a holder (9), which is connected to the slinger pot (2), wherein the float lever (6) is connected to a wiper lever (17), projects with an offset portion (16) through an opening (18) of the wiper lever (17), projects into a bearing bore (15) of the holder (9) and is locked by a lever portion situated below the offset portion (16) in a clip (23) against axial withdrawal from the bearing bore (15), and wherein the wiper lever (17) engages with a bottom edge (19) round a collar (20) of the holder (9) and with a top edge (21) behind a collar (22) of the holder (9), the top edge (21) of the wiper lever (17) engages behind the collar (22) of the holder (9) in the manner of a clip (24) and the wiper lever (17) is therefore captively guided axially in both directions inside the holder (9).

## Revendications

1. Sonde de mesure d'un niveau de liquide dans un réservoir avec un levier à flotteur (6), qui règle un potentiomètre à curseur (7) indépendamment du niveau de liquide, est disposé sur un pot antiroulis (2) d'une unité de refoulement de carburant située dans le réservoir, et présente un support (9) assemblé avec le pot antiroulis (2), le levier à flotteur (6) étant assemblé avec un levier à curseur (17), pénétrant par un coude (16) au travers d'une ouverture (18) du levier à curseur (17), pénétrant dans un alésage de palier (15) du support (9), et étant bloqué dans un clip (23), par une section de levier sous-jacente au coude (16), contre un déplacement axial hors de l'alésage de palier (15), et le levier à curseur (17) enveloppant par un bord inférieur (19) un collet (20) du support (9), et enserrant par un bord supérieur (21) un collet (22) du support (9), le bord supérieur (21) du levier à curseur (17) enserrant le collet (22) du support (9) à la manière d'un clip (24), et le levier à curseur (17) étant de ce fait guidé de façon imperdable dans le sens axial, dans les deux directions, à l'intérieur du support (9).
